# EUROPEAN PATENT SPECIFICATION

(11) **EP 1 146 992 B1**
(45) Date of publication and mention of the grant of the patent: **11.12.2002**
(21) Application number: 00900272.6
(22) Date of filing: 13.01.2000
(51) Int. Cl.: B23K 37/053

(54) **WELDING MACHINE**
SCHWEISSMASCHINE
MACHINE DE SOUDAGE

(30) Priority: 13.01.1999 GB 9900603
(43) Date of publication of application: 24.10.2001
(73) Proprietor: Meltax GmbH, 6438 Ibach (CH)
(72) Inventor: POWER, Leslie, Ernest, Wolverhampton WV6 8ST (GB); TAYLOR, Reginald, Wolverhampton WV11 3PX (GB); BRENNAN, Michael, Anthony, Northampton NN3 NTA (GB)
(74) Representative: Croston, David
(86) International application number: GB0000075
(87) International publication number: WO00041842

(56) References cited:
- FR-A- 2 173 700
- US-A- 3 699 635
- US-A- 3 920 171
- US-A- 4 582 241

## Description

The present invention relates to internal pipe welding machines.

Known internal pipe welding machines include a chassis having a front subframe of the chassis moveable relative to a rear subframe of the chassis via the intermediary of a cardan joint. With such an arrangement services that need to be passed between the front and rear subframes such as welding shield gas or compressed air therefore need to be routed around the cardan joint.

According to the present invention there is provided an internal pipe welding machine having a chassis with a front subframe being articulated relative to a rear subframe, the articulation being provided by a spherical bearing having an outer race secured to one of the front subframe and rear subframe and an inner race secured to the other of the front subframe and rear subframe.

The invention will now be described by way of example only with reference to the drawings in which :-
Figures 1-5 are successive composite cross-section views of an internal pipe welding machine according to the present invention;
Figure 6 is an enlarged view of part of figure 3; and
Figures 7 and 8 are views similar to figure 6 showing tube 537 and housing 524 in isolation for clarity.

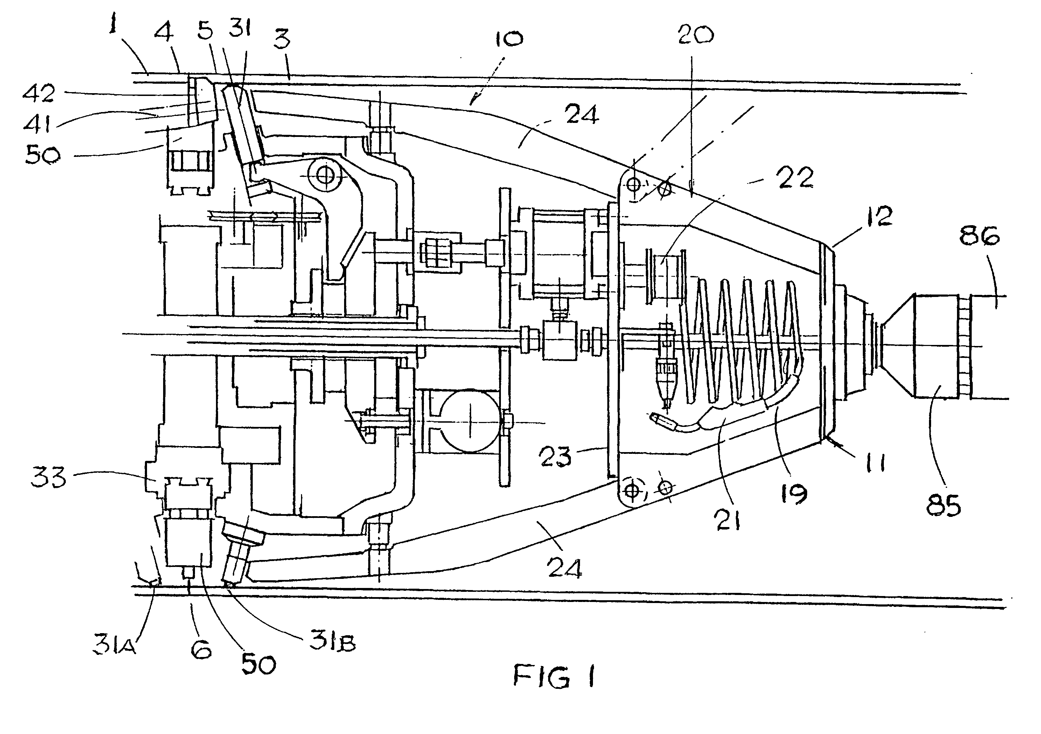

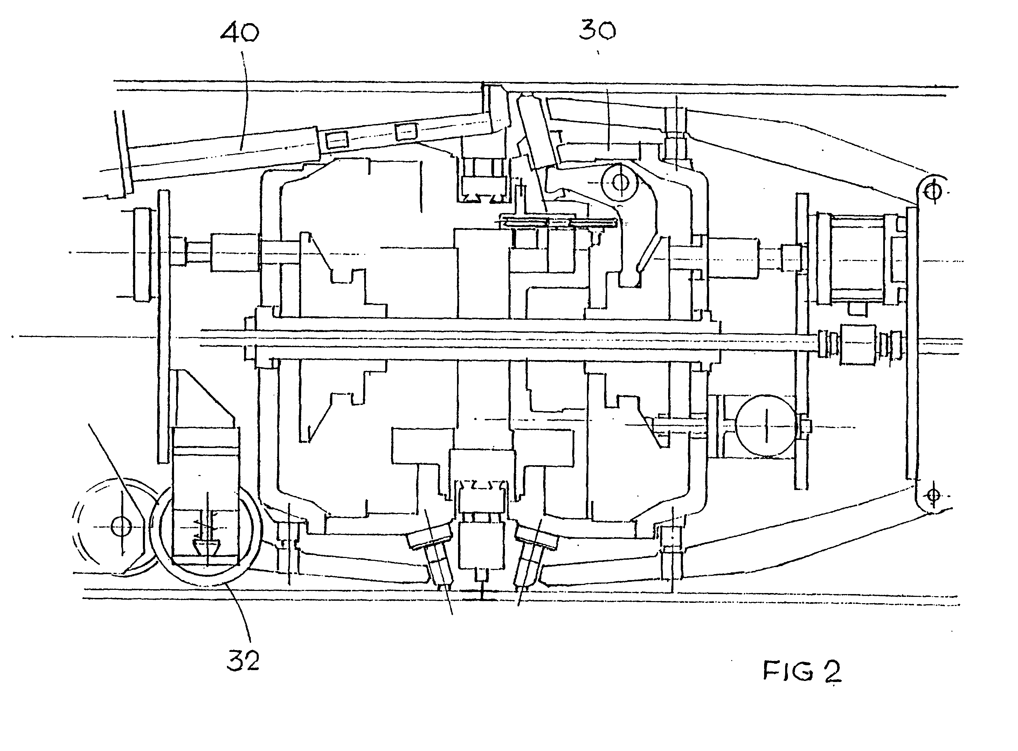

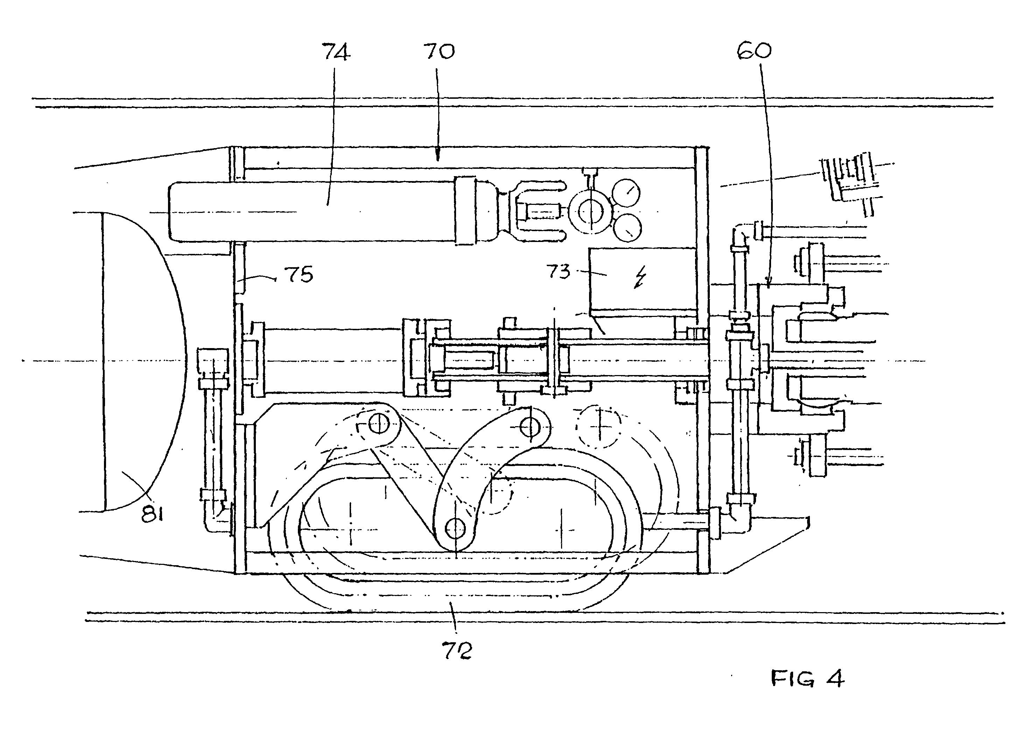

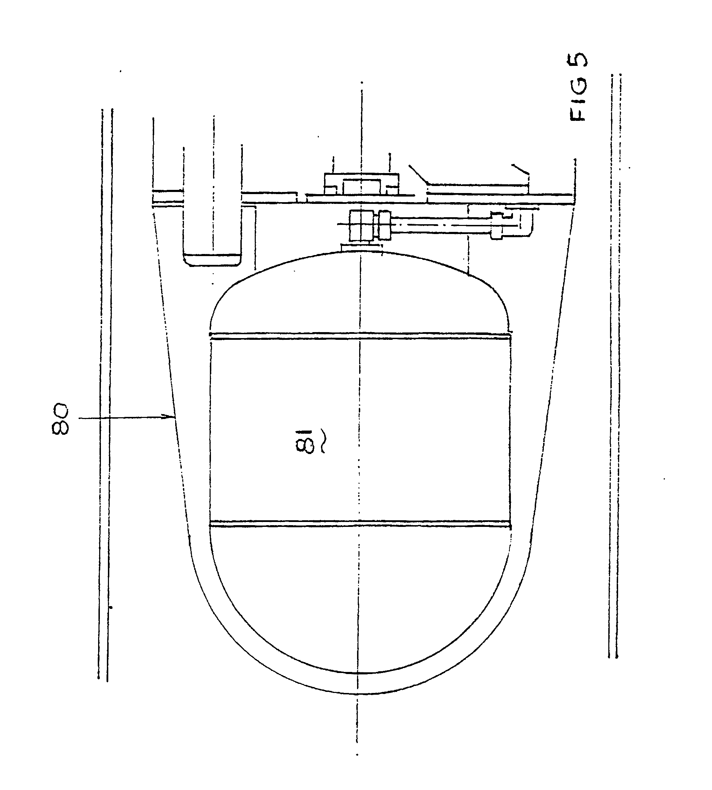

With reference to figures 1-5 there is shown an internal pipe welding machine 10 positioned within a pipeline 1. The pipeline 1 comprises a series of pipes each or which have been welded together to ensure a fluid tight pipeline.

The internal pipe welding machine 10 enables the joint 6 between the end 4 of pipeline 1 and end 5 of adjacent pipe 3 to be welded from the inside. Additionally the joint 6 can be welded from the outside by the use of a separate external pipe welding machine.

The internal pipe welding machine 10 comprises the following major components:-
a) Nose cone assembly 20
b) Thruster assembly 30
c) A plurality of arrester assemblies 40
d) A plurality of automatic welder assemblies 50
e) An articulated joint assembly 60
f) A drive assembly 70
g) An air receiver 80
h) A command rod coupling 85, and
i) A chassis 11

The nose cone assembly 20 includes a manual welder 19 including a welding torch 21 along with a spool of welding wire 22. The nose cone assembly 20 includes a plate 23 to which the thruster assembly 30 is connected. The nose cone assembly also includes a plurality of circumferentially equispaced pivotal guide arms 24 (in this case six) which are also connected to the thruster assembly 30.

Thruster assembly 30 includes a plurality of circumferentially equispaced pipe engaging clamps 31, a pair of guide wheels 32 and a rotatable ring member 33.

Mounted on ring member 33 is a plurality (in this case six) of circumferentially equispaced automatic welder assemblies 50.

A plate 61 of articulated joint assembly 60 is attached to the back of the thruster assembly 40. Attached to plate 61 is a plurality (in this case three) or circumferentially equispaced arrester assemblies 40. Each arrester assembly 40 includes an extendable shaft 41 with a positioning abutment 42 at one end.

The articulated joint assembly 60 allows the front subframe 12 of chassis 11 to articulate relative to the rear subframe 13 of chassis 11 and includes an articulated joint 62 and a plurality (in this case two) of loading wheels 63.

A plate 71 of the drive assembly 70 is attached to the back of the articulated joint assembly 60.

Drive assembly 70 includes a plurality (in this case three) or circumferentially equispaced track laying arrangements 72. Drive assembly 70 also includes 2 batteries 73 and a tank 74 of inert welding shield gas. A plate 75 of the drive assembly 70 is connected to the air receiver assembly 80.

The air receiver assembly 80 includes an air receiver tank 81.

At the front of the nose cone assembly 20 there is positioned a command rod rear coupling 85 which is releasably connected to a command rod 86. Command rod 86 is of a length such that it projects beyond the end of pipe 3 and includes at that end a command rod control panel (not shown) which can be used to control various functions of the machine and a command rod front coupling (not shown) which releasably connects the command rod to a supply of services eg. compressed air, battery charging current and welding current generators. Control signals pass down the command rod, to the machine, along with service supplies such as compressed air, welding current, and welding shield gas.

Once the internal pipe welding machine has completed a weld sequence, continued operation of the machine is as follow:-
1) An operator standing at the open end of the pipeline, ie, at the open end of the pipe that has newly been welded into place, adjacent the command rod control panel disconnects the command rod front coupling from the services and then operates the panel so as to retract the clamps and then start the air motors which in turn drive each track drive 72 so as to advance the machine along the pipeline 1 with the front subframe 12 being carried on guide wheels 32. The air motors are supplied by pressurised air from the air receiver tank 81.
   The machine is advanced, pushing the control rod before it, the control rod being fed into the next pipe to be welded which has previously been located proximate the end of the pipeline. A wall proximity sensor (not shown) moulded on the machine engages the inner wall of the pipe. When the nose cone assembly 20 projects from the open end of the pipeline 1 to such an extent that the proximity sensor no longer engages the wall, the machine is automatically stopped.
2) The operator further advances the machine by operating a machine control panel (not shown), situated within the nose cone assembly and accessable to the operator, such that the automatic welder assemblies 50 project beyond the open end of the pipeline.
3) The extendable shaft 41 of each arrester assembly 40 is then extended and rotated such that the positioning abutment 42 is axially aligned with a weld plane of the welder assemblies 50 and radially aligned with the end of the pipeline.
4) The operator then reverses the machine until the positioning abutments 42 contact the pipeline and prevent further rearward movement of the machine. At this position the weld plane of the automatic welder assemblies are now aligned with the end of the pipeline (see fig 1).
5) The rearmost pipe-engaging clamps 31A are then deployed to clamp the machine securely relative to the pipeline.
6) Each positioning abutment 42 is then rotated about the axis of the extendable shaft 41, and the extendable shaft is then withdrawn such that each positioning abutment lies between two adjacent rear pipe-engaging clamps 31A, clear of the path of the automatic welder assemblies (see below).
7) The section of pipe is then moved such that its end to be welded abuts the end 4 of the pipeline.
8) The operator then deploys the front pipe-engaging clamps 31B by using the command rod control panel.
9) At some convenient time following stage 1) above of the operation of the machine, and prior to welding (see below) the control rod front coupling is reconnected to the supply of services and the air receiver tank 81 can be re-pressurized if necessary.
10) Welding of the joint 6 between the pipe 3 pipeline 1 then occurs in two stages:
   Firstly the automatic welder assemblies positioned at 12 o'clock. 2 o'clock and 4 o'clock (when viewing from the front of the machine) weld the joint 6 whilst the ring member 33 rotates clockwise by approximately 60 degrees to weld one half of the joint 6. It should be noted that the automatic welder assemblies originally positioned at 6 o'clock. 8 o'clock and 10 o'clock are now positioned at 8 o'clock. 10 o'clock and 12 o'clock respectively. These latter automatic welder assemblies are then operated whilst the ring member is rotated sixty degrees anti-clockwise to weld the remaining half of the joint 6.
11) The operator then unclamps the front and rear pipe-engaging clamps via the command rod control panel and the machine can be advanced further along the pipeline to the next weld position.

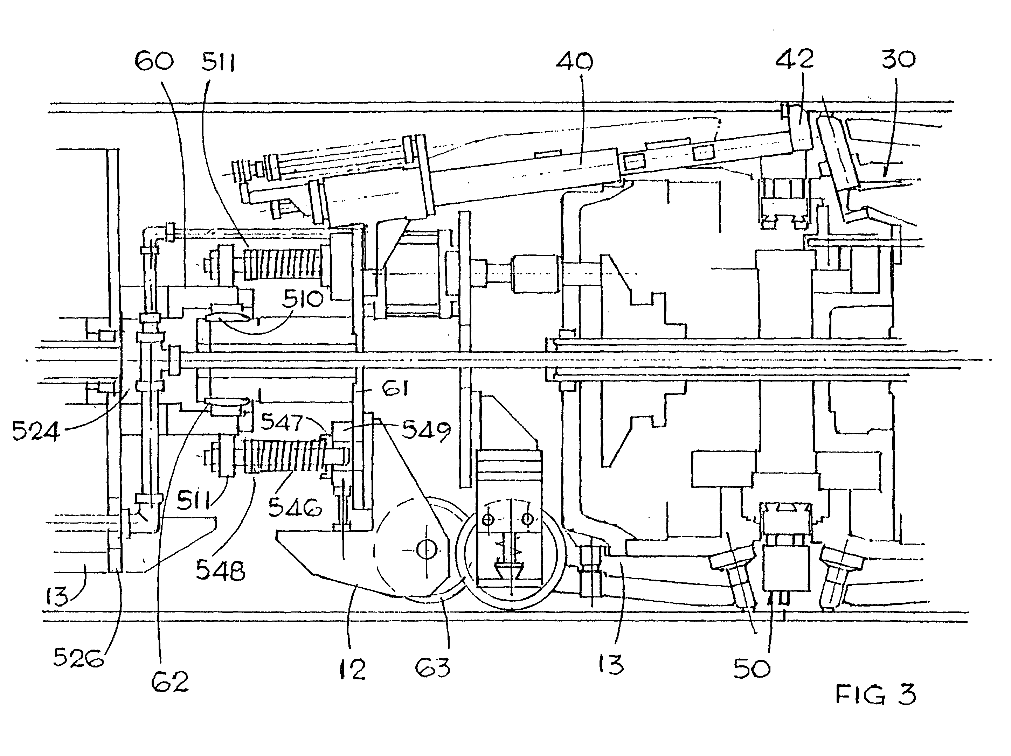

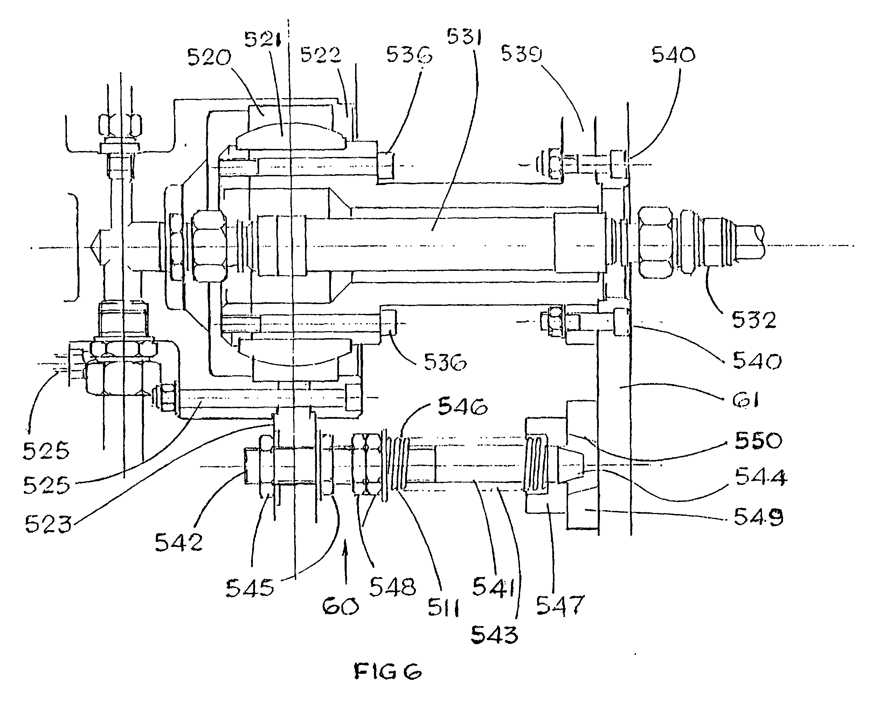

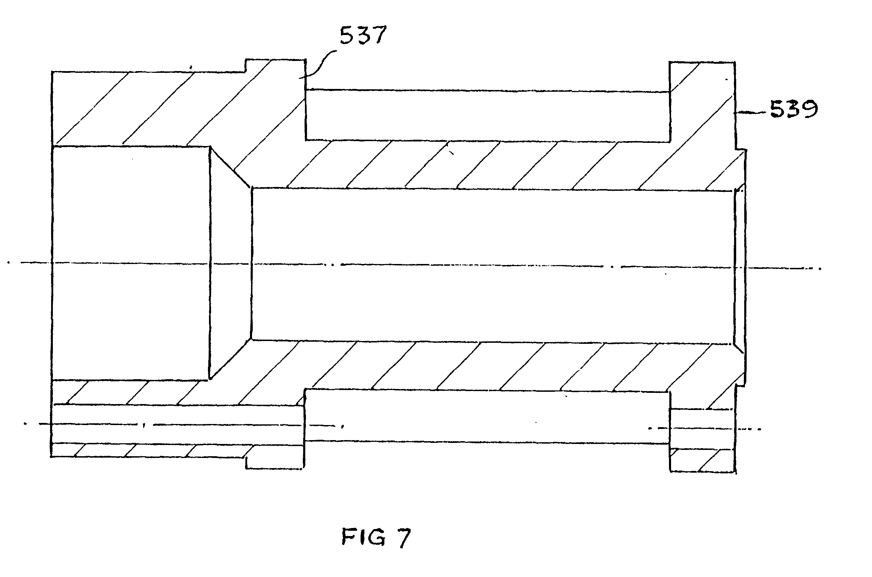

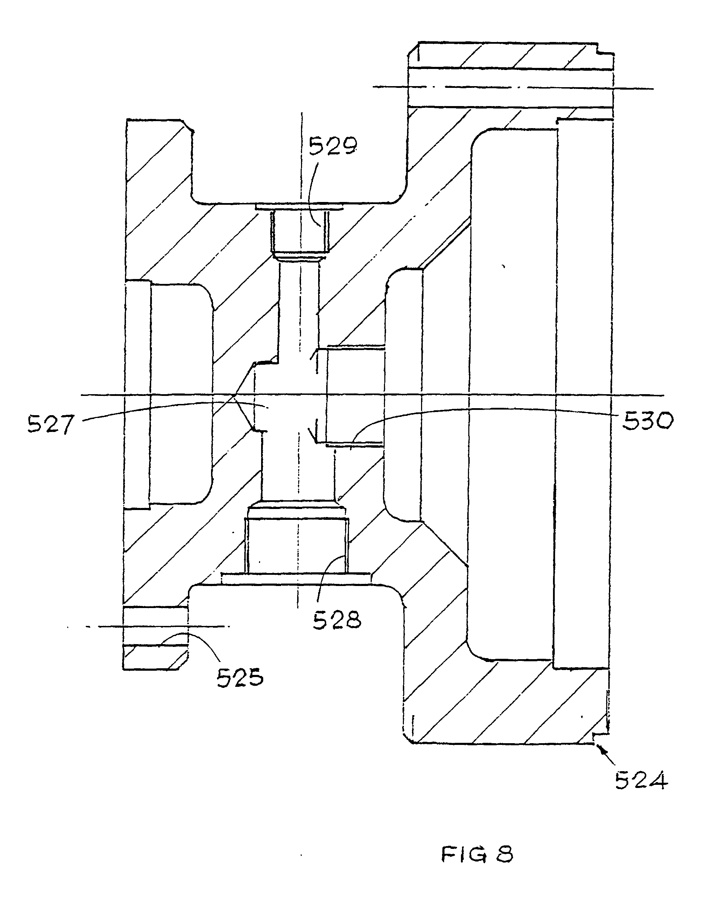

With reference to figures 3 and 6-8 there is shown an articulated joint assembly 60 including a spherical bearing 510 and a plurality (in this case 6) of circumferentially equispaced articulation resisting means 511.

The spherical bearing 510 includes an outer race 520 and an inner race 521. Outer race 520 is mounted in clamp collar 522, plate 523 and housing 524. Nuts and bolts 525 secure the clamp collar 522, plate 523 and housing 524 together such that outer race 520 is axially fixed.

Housing 524 is secured through holes 525 to plate 526 of the rear subframe 13 on the chassis 11. Housing 524 includes a manifold 527 having a port 528 connected to air receiver tank 81, a port 529 connected to the actuators of the rear clamp arrangement and a port 530 connected via flexible pipe 531 and rigid pipe 532 to the actuators of the front clamp arrangement. Pipe 532 is secured to plate 61 of the front subframe 12 of the chassis 11.

Bolts 536 secure tube 537 and collar 538 together such that they clamp the inner race 521. End 539 of tube 537 is secured to plate 61 via nut and bolt arrangement 540.

Thus the spherical bearing 510 allows the front subframe to pitch, yaw and roll relative to the rear subframe whilst services (in this case pressurised air) can be carried between the front and rear subframes through the bearing races 520 and 521.

The flexible pipe 531 compensates for a relative movement between the front and rear subframes of the chassis 11.

Each articulation resisting means 511 comprises an axially orientated pin 541 having a threaded portion 542, a plain portion 543 and a conical nose portion 544. Nuts 545 adjustably secure the pin axially relative to plate 523. Mounted on plane portion 543 is a compression spring 546 which acts between collar 547 and washer and nuts arrangement 548. Abutment 549 is secured to plate 61 and includes conical abutment surfacs 550.

The washer and nut arrangements 548 of each articulation resisting means are arranged to put their respective springs 546 in to compression to provide a preload which biases the front and rear subframes into alignment.

Should the subframe pitch relative to each other eg. as a result of an upward or downward bend in the pipeline or yaw relative to each other eg, as a result of a right or left-hand bend in the pipeline the pin collars 547 slide relative to their respective abutments 549.

Pitch and yaw movement is limited when the conical nose portion 544 of one or more pins 541 contacts the respective conical abutment surface 550 of the abutment 549.

As mentioned previously the spherical bearing 510 also allows roll of the front subframe relative to the rear subframe. However such roll is limited by appropriate contact of one or move conical nose portions 544 with corresponding conical abutment surfaces 550.

The articulation resisting means 511 therefore not only limit pitch and yaw movement of the front subframe relative to the rear subframe but also limit roll movement of these components relative to each other.

## Claims

1. An internal pipe welding machine (10) having a chassis (11) with a front subframe being articulated relative to a rear subframe, **characterized by** the articulation being provided by a spherical bearing (510) having an outer race (520) secured to one of the front subframe and rear subframe and an inner race (521) secured to the other of the front subframe and rear subframe, wherein supply of services between the front subframe and rear subframe pass through the spherical bearing races.

2. An internal pipe welding machine as defined in claim 1 in which the supply of services is the supply of compressed air.

3. An internal pipe welding machine as defined in claim 1 or 2 in which articulation resisting means (542, 545, 546, 547, 548) acts to resist articulation in a pitch and yaw direction of the front subframe relative to the rear subframe.

4. An internal pipe welding machine as defined in claim 3 in which the articulation resisting means also limits articulation in a roll direction of the front subframe relative to the rear subframe.

5. An internal pipe welding machine as defined in claim 3 or 4 in which the articulation resisting means comprises a plurality of substantially axially orientated resilient means (546) functionally acting between the front and rear subframes.

6. An internal pipe welding machine as defined in claim 5 in which the resilient means are springs mounted on pins (541) secured relative to one of the front subframe and rear subframe.

7. An internal pipe welding machine as defined in claim 6 in which each pin engages a respective hole of the other or the front subframe and rear subframe to limit pitch, yaw and roll movement or the front subframe relative to the rear subframe.

## Patentansprüche

1. Innenrohrschweißmaschine (10) mit einer Montageplatte (11) mit einem vorderen Teilgestell, welches sich in Gelenkverbindung mit einem hinteren Teilgestell befindet, **dadurch gekennzeichnet, daß** die Gelenkverbindung durch ein Kugelflächenlager (510) mit einem äußeren Laufring (520), welcher entweder an dem vorderen Teilgestell oder dem hinteren Teilgestell befestigt ist, und einem inneren Laufring (521), welcher an dem jeweils anderen Teilgestell aus der Gruppe des vorderen Teilgestells und des hinteren Teilgestells befestigt ist, erfolgt, wobei die Betriebsmittelversorgung zwischen dem vorderen Teilgestell und dem hinteren Teilgestell durch die Kugelflächenlagerlaufringe verläuft.

2. Innenrohrschweißmaschine nach Anspruch 1, wobei die Betriebsmittelversorgung die Druckluftversorgung ist.

3. Innenrohrschweißmaschine nach Anspruch 1 oder 2, wobei eine Gelenkwiderstandseinrichtung (542, 545, 546, 547, 548) geeignet wirkt, um einer Gelenkbewegung des vorderen Teilgestells gegen das hintere Teilgestell in einer Neige- und einer seitlichen Ablenkrichtung zu widerstehen.

4. Innenrohrschweißmaschine nach Anspruch 3, wobei die Gelenkwiderstandseinrichtung ferner die Gelenkbewegung des vorderen Teilgestells gegen das hintere Teilgestell in einer Rollrichtung begrenzt.

5. Innenrohrschweißmaschine nach Anspruch 3 oder 4, wobei die Gelenkwiderstandseinrichtung eine Vielzahl im wesentlichen in Axialrichtung ausgerichteter elastischer Einrichtungen (546) umfaßt, welche geeignet zwischen dem vorderen und dem hinteren Teilgestell wirken.

6. Innenrohrschweißmaschine nach Anspruch 5, wobei die elastischen Einrichtungen Federn sind, welche auf Zapfen (541) angebracht sind, welche entweder bezüglich des vorderen Teilgestells oder des hinteren Teilgestells befestigt sind.

7. Innenrohrschweißmaschine nach Anspruch 6, wobei sich jeder Zapfen in Eingriff mit einem jeweiligen Loch des jeweils anderen Teilgestells aus der Gruppe des vorderen Teilgestells und des hinteren Teilgestells befindet, um die Neigungs-, die seitliche Ablenk- und die Rollbewegung des vorderen Teilgestells gegen das hintere Teilgestell zu begrenzen.

## Revendications

1. Machine de soudage interne de canalisation (10) possédant un châssis (11) à cadre avant articulé à un cadre arrière, **caractérisé en ce que** l'articulation prévue est un roulement sphérique (510) présentant une bague externe (520) fixée à l'un des cadres avant ou arrière et une bague interne (521) fixée à l'autre des cadres avant ou arrière, dans lequel les liaisons de services entre le cadre avant et le cadre arrière passent à travers les bagues de roulements sphériques.

2. Machine de soudage interne de canalisation selon la revendication 1, dans laquelle la liaison de services est la fourniture d'air comprimé.

3. Machine de soudage interne de canalisation selon la revendication 1 ou 2, dans laquelle des moyens (541, 545, 546, 547, 548) résistant à l'articulation agissent pour résister à l'articulation dans une direction de tangage et de lacet du cadre avant par rapport au cadre arrière.

4. Machine de soudage interne de canalisation selon la revendication 3, dans laquelle les moyens résistant à l'articulation limitent également l'articulation dans une direction de roulement du cadre avant vers le cadre arrière.

5. Machine de soudage interne de canalisation selon la revendication 3 ou 4, dans laquelle les moyens résistant à l'articulation comprennent une pluralité de moyens élastiques (546) selon une direction sensiblement axiale agissant de manière active entre les cadres avant et arrière.

6. Machine de soudage interne de canalisation selon la revendication 5, dans laquelle les moyens élastiques sont des ressorts montés sur des chevilles (541) fixées à l'un des cadres avant ou arrière.

7. Machine de soudage interne de canalisation selon la revendication 6, dans laquelle chaque cheville s'engage dans un orifice respectif de l'un ou de l'autre des cadres avant et arrière pour limiter le mouvement de tangage, de lacet et de roulis du cadre avant par rapport au cadre arrière.
